(19) Europäisches Patentamt / European Patent Office / Office européen des brevets

(11) **EP 2 937 812 B1**

(12) **FASCICULE DE BREVET EUROPEEN**

(45) Date de publication et mention de la délivrance du brevet:
**06.06.2018 Bulletin 2018/23**

(51) Int Cl.:
*G06K 9/00* *(2006.01)*        *G08G 1/017* *(2006.01)*

(21) Numéro de dépôt: **15164368.1**

(22) Date de dépôt: **21.04.2015**

(54) **SYSTÈME DE LOCALISATION D'UN MÊME VÉHICULE DANS PLUSIEURS ZONES DIFFÉRENTES LES UNES DES AUTRES DANS LESQUELLES LEDIT VÉHICULE PASSE CONSÉCUTIVEMENT**

LOKALISIERUNGSSYSTEM EINES FAHRZEUGS IN MEHREREN VERSCHIEDENEN ZONEN, DIE DAS FAHRZEUG NACHEINANDER DURCHFÄHRT

SYSTEM FOR LOCATING A SINGLE VEHICLE IN A PLURALITY OF AREAS DIFFERENT FROM ONE ANOTHER THROUGH WHICH SAID VEHICLE PASSES CONSECUTIVELY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2014 FR 1453685**

(43) Date de publication de la demande:
**28.10.2015 Bulletin 2015/44**

(73) Titulaire: **Morpho**
**92130 Issy-les-Moulineaux (FR)**

(72) Inventeurs:
• **Rouh, Alain**
 **92130 ISSY LES MOULINEAUX (FR)**
• **le Gouil, Elise**
 **92130 ISSY LES MOULINEAUX (FR)**
• **Beaudet, Jean**
 **92130 ISSY LES MOULINEAUX (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A2-2007/107875      US-A1- 2005 027 435**
**US-A1- 2006 078 197      US-A1- 2012 212 617**

• TAN T N ET AL: "MODEL-BASED LOCALISATION AND RECOGNITION OF ROAD VEHICLES", INTERNATIONAL JOURNAL OF COMPUTER VISION, KLUWER ACADEMIC PUBLISHERS, NORWELL, US, vol. 27, no. 1, 1 mars 1998 (1998-03-01), pages 5-25, XP000765201, ISSN: 0920-5691, DOI: 10.1023/A:1007924428535
• LOUKA DLAGNEKOV: "Video-based Car Surveillance: License Plate, Make, and Model Recognition", INTERNET CITATION, 1 janvier 2005 (2005-01-01), page 93pp, XP007911253, Extrait de l'Internet: URL:http://vision.ucsd.edu/belongie-grp/re search/carRec/dlagnekov_thesis_2005.pdf [extrait le 2010-01-21]

**Description**

La présente invention concerne un système de localisation d'un même véhicule dans plusieurs zones différentes les unes des autres dans lesquelles ledit véhicule passe consécutivement. La présente invention trouve notamment application dans l'évaluation de la vitesse moyenne de véhicules entre deux lieux différents, dans l'évaluation de la vitesse instantanée en des lieux de chacune desdites première et seconde zones et dans la détection de franchissement de lignes, par exemple lignes de stop, passages à niveaux, de feux rouges, etc.

Dans le contrôle de la circulation routière, il existe des besoins de localisation d'un même véhicule dans une première zone puis dans une seconde zone différente de ladite première zone. Ces besoins sont par exemple dans la mesure de la vitesse moyenne d'un véhicule sur un tronçon d'une route avec une précision permettant l'homologation métrologique du système. Ils peuvent aussi être la détection du franchissement de lignes, de lignes de feux rouges, avec éventuellement enregistrement d'une photographie avec le véhicule à cheval sur la ligne ou les lignes en question ou avant ou après la ou lesdites lignes.

De manière générale, la localisation d'un véhicule dans une zone donnée peut être effectuée au moyen d'un système de localisation constitué d'une caméra qui assure la reconnaissance du véhicule, notamment de sa plaque d'immatriculation, et d'un capteur additionnel, tel qu'une boucle au sol, permettant de garantir la précision de positionnement du véhicule. Le document WO2007/107875 divulgue un tel système. Elle peut aussi être effectuée au moyen d'un système de localisation 3D constitué d'une paire de caméras qui assure à la fois la reconnaissance du véhicule et la détermination de son positionnement avec suffisamment de précision.

La localisation d'un même véhicule dans une première zone puis dans une seconde zone différente de ladite première zone peut alors être effectuée par le doublement de l'un ou l'autre de ces systèmes de localisation simples ce qui implique un doublement des coûts d'installation. Dans le contrôle de la circulation routière, comme par exemple dans l'évaluation de la vitesse moyenne de véhicules, ou la détection de franchissement de lignes, il existe également des besoins de localisation d'un même véhicule dans plusieurs zones différentes. Des systèmes de localisation dans plusieurs zones posent les mêmes problèmes que ceux qui ont été évoqués précédemment.

Le but de l'invention est de proposer un système de localisation d'un même véhicule dans plusieurs zones différentes les unes des autres qui soit plus simple à mettre en oeuvre et moins coûteux que la juxtaposition de systèmes de localisation simples tels que ceux qui viennent d'être évoqués.

A cet effet, un système de localisation d'un même véhicule dans au moins deux zones dans lesquelles il passe consécutivement, selon l'invention, est défini par l'objet de la revendication 1. Selon une autre caractéristique avantageuse de l'invention, l'unité de modélisation détermine les coordonnées d'un point ou d'un ensemble discret de points qui appartiennent au véhicule considéré ou une partie de celui-ci, lorsqu'il se trouve au premier lieu, ledit modèle au premier lieu comprenant lesdites coordonnées.

Selon une autre caractéristique avantageuse de l'invention, ledit ou lesdits points dudit ensemble discret de points appartiennent à un même plan d'une partie du véhicule considéré, ledit modèle au premier lieu incluant de plus des informations définissant ledit plan.

Selon une autre caractéristique avantageuse de l'invention, ladite unité d'estimation de position estime la variation de pose dudit véhicule considéré entre ledit premier lieu de la première zone et le second lieu de la seconde zone et en déduit, pour au moins un point du modèle au premier lieu, les coordonnées du point au second lieu correspondant.

Selon une autre caractéristique avantageuse de l'invention, pour estimer la variation de pose dudit véhicule, ladite ou chaque unité d'estimation de position met en oeuvre une méthode d'optimisation non-linéaire de l'erreur de reprojection.

Selon une autre caractéristique avantageuse de l'invention, l'unité de modélisation détermine les coordonnées d'au moins un point qui appartient au véhicule considéré ou une partie de celui-ci, lorsqu'il se trouve au premier lieu, ledit modèle au premier lieu comprenant, d'une part, lesdites coordonnées et, d'autre part, des informations définissant le plan de la route sur laquelle ledit véhicule considéré circule ou la hauteur dudit ou desdits point(s) au-dessus de ladite route.

Selon une autre caractéristique avantageuse de l'invention, il comporte de plus au moins une unité d'estimation de position qui est associée à une caméra monoculaire d'une zone autre que la première zone et qui est prévue pour agir en tant qu'unité de modélisation et ainsi établir un modèle à un lieu de ladite zone considérée du véhicule ou d'une partie dudit véhicule et pour transmettre ledit modèle à une unité d'estimation de position suivante.

La présente invention concerne également un système d'estimation de la vitesse moyenne d'un véhicule entre deux zones éloignées l'une de l'autre, ledit système comprenant :

- un système de localisation pour localiser un même véhicule dans un premier lieu d'une première zone desdites zones et dans un second lieu d'une seconde zone desdites zones,
- des moyens pour déterminer la durée du trajet du véhicule entre le premier lieu et le second lieu,

- des moyens pour estimer la distance curviligne entre le premier lieu et ledit second lieu,
- des moyens pour déterminer la vitesse moyenne dudit véhicule à partir de ladite durée et ladite distance curviligne.

Selon l'invention, ledit système d'estimation de vitesse moyenne est caractérisé en ce que ledit système de localisation est un système de localisation tel qu'il vient d'être décrit.

La présente invention concerne encore un système de détection de franchissement par un véhicule d'au moins une ligne dans une zone.

Selon l'invention, ledit système de détection est caractérisé en ce que lesdits moyens de détection sont constitués d'un système de localisation tel qu'il vient d'être décrit, dont ladite unité de modélisation ou ladite ou chaque unité d'estimation de position est en outre pourvue d'un système de suivi pour détecter le franchissement de la ligne de la zone considérée.

La présente invention concerne encore un système de mesure de la vitesse instantanée d'un véhicule dans un lieu d'une zone qui est caractérisé en ce qu'il comprend un système de localisation tel qu'il vient d'être décrit.

La présente invention concerne également un procédé de localisation d'un même véhicule dans au moins deux zones dans lesquelles il passe consécutivement, ledit procédé étant mis en oeuvre par un système de localisation tel qu'il vient d'être décrit.

La présente invention concerne également un procédé d'estimation de la vitesse moyenne d'un véhicule entre deux zones différentes et éloignées l'une de l'autre, un procédé de détection du franchissement d'au moins une ligne d'une zone par un véhicule, ainsi qu'un programme inscrit sur un support et destiné à être chargé dans un dispositif programmable d'un système de localisation, d'un système d'estimation de vitesse moyenne ou d'un système de détection de franchissement de lignes, tels que ceux qui viennent d'être décrits.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 est une vue schématique d'un système de localisation selon un premier mode de réalisation de la présente invention,
- la Fig. 2 est une vue schématique d'un système de localisation selon un autre mode de réalisation de la présente invention,
- la Fig. 3 est une vue schématique illustrant à la fois l'application pour l'estimation de la vitesse moyenne d'un véhicule entre deux lieux de deux zones respectives et l'application à la détection de franchissement de feux rouges d'un système de localisation selon la présente invention,
- la Fig. 4 est une vue schématique d'une unité de traitement d'un système de localisation selon la présente invention,
- les Figs. 5a et 5b sont des organigrammes illustrant un procédé de localisation de véhicule selon la présente invention.

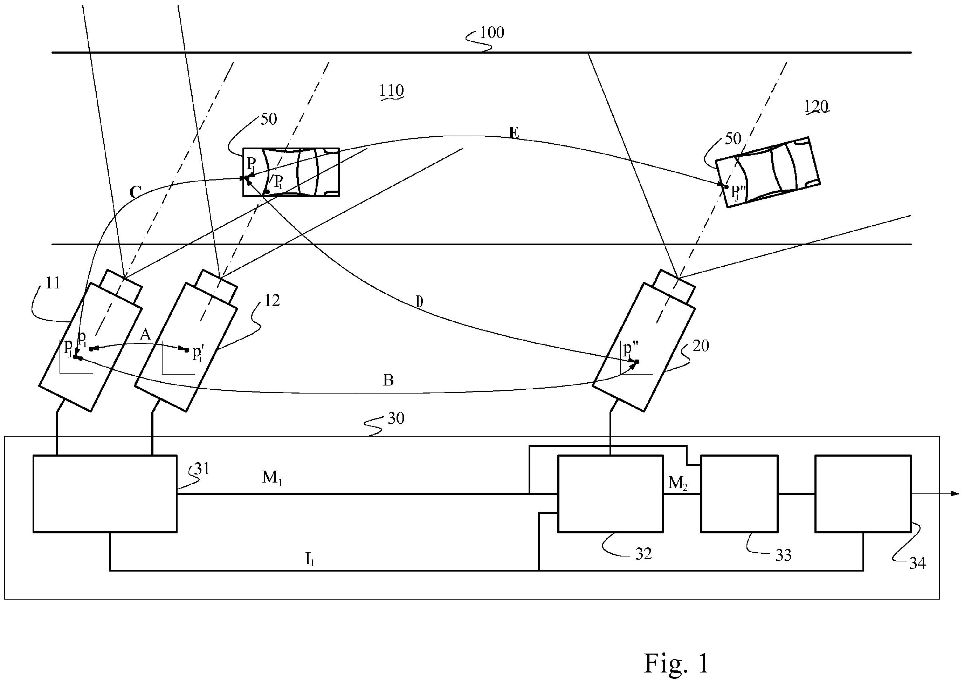

Le système de localisation représenté à la Fig. 1 comprend essentiellement une paire de caméras 11 et 12 dont les champs de visée incluent une première zone 110 d'une chaussée 100 dans un lieu, dit premier lieu, dans lequel on souhaite localiser un véhicule 50 roulant sur ladite chaussée 100 ainsi qu'une caméra 20 dont le champ de visée inclut une seconde zone 120 de la chaussée 100 différente de ladite première zone 110, dans un lieu, dit second lieu, dans lequel on souhaite aussi localiser le même véhicule 50 après que celui-ci a été localisé dans le premier lieu 110.

Dans la présente description, l'expression "localiser un véhicule dans un lieu" signifie que l'on a une connaissance de la position de ce véhicule dans le lieu en question.

La paire de caméras 11 et 12 et la caméra 20 sont reliées à un même système de traitement d'images 30 qui est constitué d'une unité de modélisation 31, d'une unité d'estimation de position 32, d'une unité de traitement de position 33 et d'une unité de rapport 34.

Les caméras 11, 12 et 20 sont des caméras monoculaires.

L'unité de modélisation 31 reçoit les signaux d'images de la paire de caméras 11 et 12 et détermine, à partir de ces signaux, un modèle 3D de chaque véhicule 50 devant elles ou d'une partie de chaque véhicule 50, par exemple sa partie arrière incluant sa plaque d'immatriculation, ou même uniquement un point remarquable tel que le barycentre de sa plaque d'immatriculation. L'unité de modélisation 31 comporte pour ce faire des moyens pour discriminer les véhicules qui sont devant les caméras 11 et 12, par exemple par détection et lecture de leurs plaques d'immatriculation. Pour plus de détails, on pourra se reporter à la thèse de Louka Dlagnekov à l'université of Californie à San Diego, intitulée "Video-Based Car Surveillance : License Plate, Make and Model Récognition" publiée en 2005.

Du fait que chaque modèle 3D considéré ici correspond à un véhicule 50 qui se trouve dans le premier lieu à l'intérieur de la première zone 110, le modèle en question est dit ci-après "modèle au premier lieu". Les caméras 11 et 12 sont calibrées ce qui signifie que leurs paramètres intrinsèques sont connus et utilisés par l'unité de modélisation 31. Ces paramètres intrinsèques sont par exemple donnés par les coefficients d'une matrice K. De même, les paramètres extrinsèques de l'une des caméras, par exemple la caméra 12, par rapport à l'autre de la paire, sont connus et utilisés par l'unité de modélisation 31.

Les images respectivement formées dans des plans dits rétiniens par les caméras 11 et 12 d'un point Pi de coordonnées (x, y, z) situé devant elles (les points Pi sont dits "Points antécédents") sont respectivement des points pi et p'i de coordonnées (u, v) et (u', v') (les points pi et p'i sont dits "points images") qui vérifient les équations suivantes :

$$\lambda_i \begin{bmatrix} p_i \\ 1 \end{bmatrix} = K \begin{bmatrix} 1 & 0 & 0 & 0 \\ 0 & 1 & 0 & 0 \\ 0 & 0 & 1 & 0 \end{bmatrix} \begin{bmatrix} P_i \\ 1 \end{bmatrix} = K \begin{bmatrix} I_3 & 0 \end{bmatrix} \begin{bmatrix} P_i \\ 1 \end{bmatrix} \quad (1)$$

et

$$\lambda'_i \begin{bmatrix} p'_i \\ 1 \end{bmatrix} = K' \begin{bmatrix} R_{12} & T_{12} \end{bmatrix} \begin{bmatrix} P_i \\ 1 \end{bmatrix} \quad (2)$$

où $[R_{12}\ T_{12}]$ ($R_{12}$ est une matrice de rotation et $T_{12}$ est un vecteur de translation) exprime les paramètres extrinsèques de la caméra 12 par rapport à la caméra 11 et $\lambda$ et $\lambda'_i$ sont des facteurs arbitraires traduisant qu'à un même point antécédent $P_i$ correspond une infinité de points images $p_i$ et $p'_i$. $I_3$ est la matrice unité de dimensions 3 x 3.

Les images prises par les caméras 11 et 12 étant données, l'unité de modélisation 31 met en correspondance les points images $p_i$ et $p'_i$ comme étant des images d'un même point antécédent $P_i$ (voir flèche A) d'un même objet. Cette mise en correspondance est connue de l'homme du métier et peut être réalisée par la méthode qui est exposée dans l'article de Lowe, David G. intitulé "Distinctive Image Features From Scale-Invariant Keypoints" publié dans International journal ofcomputer vision 60.2 (2004) p91-110. On pourra également se reporter à l'article de Bay H., Ess A., Tuytelaars T., Van Gool L., intitulé "Speeded-up robust features (SURF)" publié dans Computer Vision and Image Understanding, vol. 110, n°3, p. 346-359, 2008.

Les équations (1) et (2) ci-dessus montrent qu'à chaque couple de points images $p_i$, $p'_i$ ainsi mis en correspondance, on a un système linéaire de 6 équations avec seulement 5 inconnues qui sont respectivement les deux facteurs $\lambda$ et $\lambda'_i$ et les trois coordonnées x, y, z du même point $P_i$ antécédent de ces points images $p_i$ et $p'_i$. Il est donc possible, à partir des images fournies par les caméras 11 et 12 calibrées, de déterminer les coordonnées (x,y,z) de points remarquables $P_i$ du véhicule 50 considéré ou une partie de celui-ci, telle que son arrière incluant sa plaque d'immatriculation.

On entend par "points remarquables", des points d'un véhicule qui sont reconnaissables parmi d'autres et qui, du fait de cette propriété "de remarquable", peuvent être détectés assez facilement. Il peut par exemple s'agir des quatre coins d'une plaque d'immatriculation et, delà, son barycentre, un coin d'un pare-brise, d'un phare, le point de contact d'une roue avec la route, etc.

L'ouvrage de Hartley, Richard and Andrew Zisserman intitulé "Multiple View Geometry In Computer Vision", Cambridge, 2000 peut être consulté pour l'exposé du modèle mathématique ci-dessus et des méthodes de modélisation par stéréoscopie au moyen de deux caméras calibrées, tels qu'exposés succinctement ici.

L'unité de modélisation 31 est prévue pour établir un modèle à un premier lieu $M_1$ du véhicule 50 ou d'une partie de celui-ci lorsqu'il se trouve dans ladite première zone 110. Sur la Fig. 1, le modèle délivré par l'unité de modélisation 31 est désigné par la référence $M_1$ qui se lit : modèle au premier lieu.

On propose dans la suite de la présente description, trois modes de réalisation de la présente invention selon la constitution du modèle en question.

Dans le premier mode de réalisation, le modèle au premier lieu $M_1$ délivré par l'unité de modélisation 31 est un ensemble discret d'au moins trois points remarquables $P_i$ de coordonnées (x, y, z) qui appartiennent au véhicule 50 considéré ou une partie de celui-ci. D'autres points qui appartiennent aussi à l'objet mais qui n'appartiennent pas à cet ensemble discret peuvent être obtenus par extrapolation ou interpolation de certains points de cet ensemble. Il s'agit là d'un modèle 3D de l'objet considéré.

Dans ce premier mode de réalisation, l'unité d'estimation de position 32 comporte des moyens pour recevoir les signaux d'images de la caméra monoculaire 20 ainsi que des moyens pour recevoir le modèle au premier lieu $M_1$ de l'unité de modélisation 31.

A l'instar de l'unité de modélisation 31, l'unité d'estimation de position 32 est pourvue de moyens pour discriminer les véhicules qui passent devant la caméra 20. De plus, elle est pourvue de moyens pour reconnaître chaque véhicule qui passe devant la caméra 20 et pour sélectionner le modèle M1 qui a été calculé par l'unité 31 pour un véhicule 50 précédemment détecté au premier lieu 110 et qui maintenant correspond au véhicule reconnu par l'unité 32. La caméra 20 est calibrée si bien que ses paramètres intrinsèques sont connus sous la forme d'une matrice K". Les images formées dans le plan dit rétinien de la caméra 20 d'un point P"j de coordonnées (x, y, z) appartenant à un véhicule 50 quand il se trouve devant la caméra 20 est l'ensemble des points images p"j de coordonnées (u", v") qui vérifient la relation suivante :

$$\lambda''_j \begin{vmatrix} p''_j \\ 1 \end{vmatrix} = K'' \begin{bmatrix} I_3 & 0 \end{bmatrix} \begin{vmatrix} P_j'' \\ 1 \end{vmatrix} \quad (3)$$

A chaque point d'un sous-ensemble des points images p"j de l'image de la caméra 20, l'unité d'estimation de position 32 fait correspondre un point image $p_j$ d'une des caméras, par exemple la caméra 11, de la paire de caméras 11 et 12 (Fig.1, flèche B). Pour ce faire, comme cela est représenté, l'unité d'estimation de position 32 reçoit les signaux d'images d'une des caméras de la paire de caméras, en l'occurrence la caméra 11. Ces signaux d'images ainsi que les points $p_i$ projections des points $P_i$ du modèle M1 dans ces images constituent des informations $I_1$ permettant à l'unité 32 d'établir une correspondance entre au moins un point p"j d'une image prise par une des caméras 11 ou 12 et une image prise par la caméra 20. Cette mise en correspondance peut être réalisée par la même méthode que celle qui a été utilisée par l'unité de modélisation 31 pour la mise en correspondance des points images $p_i$ et $p'_i$ respectivement issus des caméras 11 et 12. Ensuite, au moyen du modèle au premier lieu $M_1$ établi par l'unité de modélisation 31, l'unité d'estimation de position 32 fait correspondre, à chaque point image $p_j$ de la caméra 11 un unique point $P_j$ du modèle au premier lieu $M_1$ lorsque ledit véhicule 50 se trouvait devant la caméra 11 (Fig.1, flèche C) et, enfin, à chaque point image p"j de la caméra 20 un point $P_j$ du modèle au premier lieu $M_1$ (Fig. 1, flèche D).

Les indices i et j différents traduisent le fait que ce ne sont pas nécessairement les mêmes couples de points qui sont considérés pour cette mise en correspondance.

Or, le point P"j du véhicule 50 qui se trouve alors devant la caméra 20 correspond au même point $P_j$ du même véhicule 50 alors que celui-ci se trouvait devant la caméra 11 (Fig.1, flèche E). On peut donc écrire :

$$P''_j = \begin{bmatrix} R_v & T_v \end{bmatrix} \begin{vmatrix} P_j \\ 1 \end{vmatrix} \quad (4)$$

où $R_v$ et $T_v$ sont respectivement une matrice de rotation et un vecteur de translation qui traduisent une combinaison du déplacement réel du véhicule 50 entre les deux lieux 110 et 120 et du changement de point de vue pour passer de la caméra 11 à la caméra 20, combinaison qui est appelée ici "une variation de pose" du véhicule 50.

L'expression (4) ci-dessus traduit la relation qui existe entre les coordonnées des points $P_j$ du véhicule 50 alors qu'il se trouve au premier lieu (c'est-à-dire devant la paire de caméras 11 et 12) et les coordonnées des mêmes points, notés maintenant P"j, du même véhicule 50 alors qu'il se trouve au second lieu (c'est-à-dire devant la caméra 20) (Fig.1, flèche E). Les points $P_j$ du véhicule au premier lieu sont présents dans le modèle au premier lieu $M_1$. Une fois déterminés les coefficients de la matrice $R_v$ et les composantes du vecteur $T_v$, il est possible, connaissant le modèle au premier lieu $M_1$, de déterminer les coordonnées des points correspondants P"j du véhicule 50 au second lieu et donc, en reprenant la terminologie de la présente description, de localiser le véhicule 50 au second lieu.

Selon ce premier mode de réalisation de l'invention, l'unité d'estimation de position 32 est prévue pour estimer les coefficients de la matrice de rotation $R_v$ et les composantes du vecteur de translation $T_v$.

Compte tenu de l'expression (4) ci-dessus, l'expression (3) devient :

$$\lambda''_j \begin{vmatrix} p''_j \\ 1 \end{vmatrix} = K'' \begin{bmatrix} R_v & T_v \end{bmatrix} \begin{vmatrix} P_j \\ 1 \end{vmatrix} \quad (5)$$

Or, cette expression (5) traduit le fait qu'à chaque point image p"j de l'image de la caméra 20, correspond une infinité de points $P_j$ du modèle au premier lieu $M_1$ possibles selon la valeur prise par le paramètre $\lambda''_j$ pour le point considéré et selon la valeur des paramètres qui définissent la rotation de matrice $R_v$ et la translation de vecteur $T_v$.

Pour chaque couple de points (p"j, $P_j$), l'expression (5) ci-dessus représente trois équations (considérées, pour les besoins de la démonstration, indépendantes les unes des autres) comportant, d'une part, indépendamment du couple de points (p"j,$P_j$) considéré, six inconnues qui sont respectivement trois coefficients de la matrice de rotation $R_v$ et trois composantes du vecteur de translation $T_v$ et, d'autre part, pour chaque couple (p"j, $P_j$) donné de points, une inconnue

pour le paramètre $\lambda''_j$ correspondant. Si l'on considère trois couples de points, on dispose donc d'un système linéaire de 9 équations à 6 + 3 = 9 inconnues. Ainsi, la résolution de l'expression (5) ci-dessus est possible si l'on dispose d'au moins trois couples de points $p''_j$, $P_j$.

Différentes méthodes peuvent être utilisées pour résoudre l'expression (5) ci-dessus.

Par exemple, elle peut être résolue par calcul direct à condition de disposer d'au moins quatre couples de points ($p''_j$, $P_j$). En effet, l'équation (5) peut se réécrire sous la forme de produits vectoriels :

$$\left( K''^{-1} \begin{bmatrix} p''_j \\ 1 \end{bmatrix} \right) x \left( \begin{bmatrix} R_v & T_v \end{bmatrix} \begin{bmatrix} P_j \\ 1 \end{bmatrix} \right) = 0 \qquad (6)$$

Il s'agit là d'un système linéaire avec 12 inconnues et 3 équations par couple de points.

Pour la résolution de cette expression (6) pour un nombre de couples de points ($p''_j$, $P_j$) relativement important (généralement supérieur à trois) donnant ainsi une meilleure précision de l'estimation des coefficients de rotation et des composantes de translation, selon l'invention, il est proposé de mettre en oeuvre une méthode d'optimisation non-linéaire de l'erreur de reprojection.

L'expression (5) ci-dessus peut également s'écrire de la manière suivante :

$$\lambda''_j \begin{bmatrix} p''_j \end{bmatrix} = \begin{vmatrix} 1 & 0 & 0 \\ 0 & 1 & 0 \end{vmatrix} K'' \begin{bmatrix} R_v & T_v \end{bmatrix} \begin{vmatrix} P_j \\ 1 \end{vmatrix}$$

et $\qquad (7)$

$$\lambda''_j = \begin{bmatrix} 0 & 0 & 1 \end{bmatrix} K'' \begin{bmatrix} R_v & T_v \end{bmatrix} \begin{vmatrix} P_j \\ 1 \end{vmatrix}$$

Ainsi, pour un point $P_j$ donné et des valeurs données des coefficients de la matrice $\begin{bmatrix} R_v & T_v \end{bmatrix}$, l'équation (7) donne les coordonnées du point image théorique $p''^c_j$ (c pour calculé) :

$$p''^c_j = \frac{\begin{vmatrix} 1 & 0 & 0 \\ 0 & 1 & 0 \end{vmatrix} K'' \begin{bmatrix} R_v & T_v \end{bmatrix} \begin{vmatrix} P_j \\ 1 \end{vmatrix}}{\begin{bmatrix} 0 & 0 & 1 \end{bmatrix} K'' \begin{bmatrix} R_v & T_v \end{bmatrix} \begin{vmatrix} P_j \\ 1 \end{vmatrix}} \qquad (8)$$

L'erreur de reprojection est la norme du vecteur $p''^c_j p''_j$ entre le point image théorique $p''^c_j$ calculé et le point image $p''_j$ de l'image réellement donnée par la caméra 20 de ce point $P_j$ (comme expliqué ci-dessus), soit :

$$e_j = \left\| p''_j p''^c_j \right\| \qquad (9)$$

La méthode proposée détermine les coefficients de la matrice de rotation $R_v$ et les composantes du vecteur de translation $T_v$ par minimisation de cette erreur de reprojection e.

Selon un exemple de réalisation, cette méthode consiste à déterminer les composantes du vecteur de translation $T_v$ et les coefficients de la matrice de rotation $R_v$ qui minimisent la somme des erreurs quadratiques de projection pour un ensemble de points $P_j$ d'un même objet, véhicule ou partie de véhicule :

$$\begin{bmatrix} R_v & T_v \end{bmatrix} = \arg\min \sum_j \left( e_j^2 \right) \qquad (10)$$

Comme déjà mentionné ci-dessus, une fois déterminés les paramètres de la matrice $R_v$ et du vecteur $T_v$, il est possible, connaissant le modèle $M_1$ au premier lieu et en utilisant l'équation (4) ci-dessus, de déterminer les coordonnées d'au moins un point $P''_j$ du véhicule 50 au second lieu ou d'une partie de celui-ci.

Ainsi, chaque véhicule 50 ou une partie de celui-ci est non seulement détecté devant les caméras 11 et 12 mais il est aussi localisé devant lesdites deux caméras 11 et 12 à un premier lieu à l'intérieur de la première zone 110 de la chaussée 100, du fait qu'il est possible de déterminer les coordonnées de points ou de certains points remarquables $P_i$ qui constituent son modèle au premier lieu $M_1$. De même, il est localisé devant la caméra 20 en un second lieu précis de la seconde zone 120 de la chaussée 100, du fait que les coordonnées de points ou de certains points remarquables $P''_j$ au second lieu de ladite seconde zone 120 peuvent être déterminées par la résolution de l'expression (4) ci-dessus.

Dans le premier mode de réalisation qui a été précédemment décrit, aucune hypothèse n'a été faite quant à la forme de l'objet ou de la partie de l'objet devant les caméras 11, 12 ou 20. Dans le second mode de réalisation qui est maintenant décrit, on considère que l'unité de modélisation 31 n'établit un modèle $M_1$ que d'une partie plane, par exemple la plaque d'immatriculation, de chaque véhicule 50 devant les caméras 11 et 12. Comme on le verra par la suite, ce modèle $M_1$ comprend, outre les coordonnées (x,y,z) d'au moins un point remarquable $P_i$, une information qui définit le plan $\mathscr{P}_i$ dans lequel se trouve un ensemble discret de points remarquables $P_j$ de coordonnées (x, y, z), par exemple des points de la plaque d'immatriculation du véhicule considéré.

La transformation qui fait passer, pour un point $P_i(x,y,z)$ donné, d'un point pi de l'image formée dans le plan rétinien de la caméra 11 à un point p'i de l'image formée dans le plan rétinien de la caméra 12 est une homographie. Ainsi, si l'on ramène les équations (1) et (2) ci-dessus en une seule, la nouvelle équation peut s'écrire en coordonnées homogènes :

$$\left\lfloor \begin{matrix} p'i \\ 1 \end{matrix} \right\rfloor = Hx \left\lfloor \begin{matrix} pi \\ 1 \end{matrix} \right\rfloor \qquad (10)$$

où H est la matrice de l'homographie qui fait passer des points pi aux points p'i. Pour un plan $\mathscr{P}_i$ dont l'équation est la suivante :

$$\begin{pmatrix} x & y & z \end{pmatrix}^T . \, n + d = 0$$

si K et K' sont les paramètres intrinsèques respectifs des caméras 11 et 12, si R est une matrice rotation et T un vecteur translation définissant des paramètres extrinsèques d'une des caméras 11 et 12 par rapport à l'autre, on peut montrer que la matrice d'homographie H vérifie l'équation suivante :

$$H = K'\left( R - T\frac{n^T}{d} \right) K^{-1} \qquad (11)$$

Disposant d'une pluralité de couples de points (pi, p'i) appariés, respectivement images de même points Pi appartenant tous à un même plan $\mathscr{P}_i$, par exemple la plaque d'immatriculation du véhicule considéré, l'unité de modélisation 31 peut déterminer ou estimer les coefficients de la matrice H, puis connaissant les paramètres intrinsèques K et K' et extrinsèques des caméras 11 et 12 définis par la matrice de rotation R et le vecteur de translation T, déterminer les paramètres n et d définissant le plan $\mathscr{P}_i$ et ainsi la position relative de la partie de l'objet qui se confond avec le plan $\mathscr{P}_i$. On pourra se reporter au livre intitulé "Multiple View Geometry in Computer Vision" de R. Harley and A Zisserman paru aux éditions Cambridge University Press, et notamment au chapitre 4 et à l'algorithme 4.1.

Les paramètres n et d définissent le plan $\mathscr{P}_i$. Ils constituent, avec les coordonnées d'au moins un point remarquable $P_i$ du véhicule 50 au premier lieu, un modèle de ce véhicule (ou partie de véhicule) devant les caméras 11 et 12. Ce modèle $M_1$ est transmis par l'unité de modélisation 31 à l'unité d'estimation de position 32.

Comme précédemment, cette dernière reçoit les signaux d'images de la caméra monoculaire 20 ainsi que le modèle $M_1$. La caméra 20 est calibrée si bien que ses paramètres intrinsèques sont connus sous la forme d'une matrice K''.

Comme précédemment également, l'unité 32 dispose d'informations $I_1$ lui permettant d'établir une correspondance entre au moins un point $p''_j$ d'une image prise par une des caméras 11 ou 12 et une image prise par la caméra

20. Ces informations $I_1$ sont en l'occurrence des signaux d'images reçus d'une des deux caméras 11 ou 12 et des points $p_i$ projections des points $P_i$ du modèle M1 dans ces images. L'unité d'estimation de position 32 fait donc d'abord correspondre (voir à la Fig. 1, la flèche B) à chaque point image $p''_j$ de la caméra 20 un point image $p_j$ d'une des caméras, par exemple la caméra 11, de la paire de caméras 11 et 12. La transformation qui fait correspondre à un point pi de coordonnées (u,v) dans l'image formée dans le plan rétinien de la caméra 11 un point $p''_i$ de coordonnées (u", v") dans l'image formée dans le plan rétinien de la caméra 20 est une homographie. On peut donc écrire :

$$\begin{vmatrix} p''i \\ 1 \end{vmatrix} = H' . \begin{vmatrix} pi \\ 1 \end{vmatrix} \qquad (12)$$

Comme précédemment, la matrice d'homographie H' peut s'écrire :

$$H' = K'' \left( R_p - T_p \frac{n^T}{d} \right) K^{-1} \qquad (13)$$

où $R_p$ est une matrice rotation et $T_p$ un vecteur translation définissant le changement de pose du véhicule considéré.

En considérant une pluralité de couples de points (pi, p''i) mis ainsi en correspondance, l'unité d'estimation de position 32 calcule les coefficients de la matrice d'homographie H' faisant passer d'un point à un autre du couple. De plus, en utilisant les paramètres n et d qui lui ont été transmis par l'unité de modélisation 31, elle détermine la matrice rotation $R_p$ et le vecteur translation $T_p$.

Comme pour le premier mode de réalisation, une fois déterminés les coefficients de la matrice rotation $R_p$ et les composantes du vecteur translation $T_p$, il est possible de déterminer, par la résolution de l'expression (4) ci-dessus, les coordonnées des points ou de certains points $P''_i$ qui appartiennent au plan $\mathcal{P}_\text{l}$, alors que le véhicule 50 se trouve dans ladite seconde zone 120. Ainsi, un même véhicule (50) peut non seulement être localisé au premier lieu à l'intérieur de la première zone 110 de la chaussée 100 mais également au second lieu de la seconde zone 120 de la chaussée 100.

Dans le troisième mode de réalisation de la présente invention, l'unité de modélisation 31 ne traite qu'un unique point P(x, y, z) remarquable du véhicule 50 qui se trouve devant les caméras 11 et 12. Ce point remarquable est par exemple un point de la plaque d'immatriculation, comme son barycentre, du véhicule considéré.

Dans ce mode de réalisation, les caméras 11, 12 et 20 sont calibrées par rapport à la route considérée comme un plan $\mathcal{P}_\text{l}$ défini par des paramètres n et d, tels que l'équation du plan $\mathcal{P}_\text{l}$ peut s'écrire :

$$\begin{pmatrix} x & y & z \end{pmatrix}^T . \, n + d = 0$$

La hauteur h d'un point P de coordonnées (x,y,z) par rapport à la caméra, est donnée par la relation :

$$h = n^T . P + d \qquad (14)$$

L'unité de modélisation 31 reçoit les signaux d'images de la partie de caméras 11 et 12, détermine les coordonnées (u,v) d'un point p image par la caméra 11 d'un point P remarquable du véhicule 50 considéré (en l'occurrence, le barycentre de la plaque d'immatriculation) ainsi que les coordonnées (u',v') d'un point p' image par la caméra 12 du même point P. Elle détermine, comme cela a été décrit précédemment, les coordonnées (x,y,z) du point P et, au moyen de la relation (14) ci-dessus, la hauteur h par rapport à la route du point P. Enfin, elle transmet à l'unité d'estimation 32, le modèle $M_1$ qui est constitué des coordonnées (x,y,z) du point P et de la hauteur h.

Dans ce mode de réalisation, l'information dont dispose l'unité d'estimation de position 32 pour établir une correspondance entre le point p et le point p" est implicite sous la forme de la caractéristique ou des caractéristiques du point remarquable en question. Par exemple, cette information est le fait que ce point remarquable est le barycentre de la plaque d'immatriculation du véhicule considéré.

Pour l'unité d'estimation de position 32, un point p" image par la caméra 20 d'un point P" de coordonnées (x", y",z") vérifie la relation (3). Par ailleurs, la caméra 20 étant calibrée par rapport à la route, à l'instar de la caméra 11, on peut écrire :

$$h'' = n''^{T}. P'' + d'' \qquad (16)$$

où les paramètres n", d" définissent un plan appartenant à la route par rapport à cette caméra 20, plan $\mathscr{P}''$ d'équation :

$$\begin{pmatrix} x & y & z \end{pmatrix}^{T}. \ n''+d'' = 0$$

L'unité d'estimation de position 32 considère que la hauteur du point remarquable est constante et donc que h = h".

On peut remarquer que l'on a un système linéaire de quatre équations (trois pour la relation (3), puis une pour la relation (16), pour quatre inconnues : les coordonnées (x",y",z") du point P" et λ". Il est donc possible de déterminer les coordonnées du point P". Ainsi, un même véhicule 50 peut être localisé, par la détermination des coordonnées du point remarquable P, au premier lieu à l'intérieur de la première zone 110 de la chaussée 100 ainsi que, par la détermination des coordonnées du point P", au second lieu de la seconde zone 120 de la chaussée 100.

Un système de localisation de véhicule selon l'invention peut prévoir une quatrième caméra dont le champ de vision inclurait une troisième zone de la chaussée 100 et qui permettrait de localiser le véhicule 50 devant cette caméra après qu'il a été localisé au premier lieu de la première zone devant les caméras 11 et 12. Le processus de localisation devant cette quatrième caméra serait le même que celui qui a été décrit pour la troisième caméra 20.

Ainsi, non seulement il serait possible d'obtenir un modèle en un premier lieu à l'intérieur de la première zone 110 et un modèle en un second lieu à l'intérieur de la seconde zone 120, mais aussi un modèle en un troisième lieu à l'intérieur de la troisième zone.

Il est encore possible d'envisager autant de caméras monoculaires 20 qu'il est souhaitable.

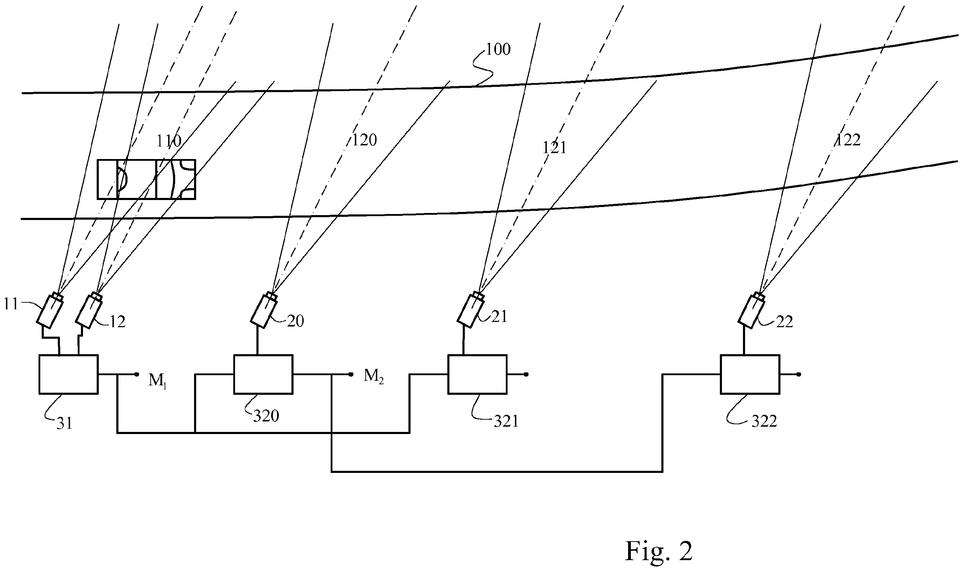

On a représenté à la Fig. 2, un autre exemple de réalisation d'un système de localisation d'un véhicule 50 selon la présente invention, ici dans plusieurs zones d'une chaussée 100 (ici 4 zones 110, 120, 121 et 122 et non plus deux zones comme à la Fig. 1) qui sont différentes les unes des autres. Le véhicule 50 passe dans ces zones consécutivement dans cet ordre. L'ordre de passage du véhicule peut néanmoins être différent et, dans ce cas, les localisations et les traitements associés dans les zones 120, 121, 122 ne peuvent être calculés qu'après passage du véhicule dans la zone 110.

Ce système comprend une paire de caméras 11 et 12 qui sont calibrées et dont les champs de vision respectifs incluent la première zone 110 desdites zones, et, pour chacune des autres zones 120, 121 et 122, une caméra monoculaire 20 à 22 calibrée dont le champ de vision inclut ladite autre zone considérée (respectivement 120 à 122).

Ce système de localisation comporte une unité de modélisation 31 qui est prévue pour recevoir les signaux d'images de chacune des caméras 11 et 12 de la paire de caméras et pour établir un modèle $M_1$ du véhicule (ou d'une partie dudit véhicule) à un premier lieu de ladite première zone 110. Ainsi sera localisé le véhicule 50 audit premier lieu, comme expliqué ci-dessus.

Pour la caméra monoculaire 20 de la zone 120, le système de localisation comporte une unité d'estimation de position 320 qui est prévue pour recevoir les signaux d'images de ladite caméra monoculaire 20 ainsi que le modèle au premier lieu $M_1$ de la zone 110 précédant ladite zone considérée 120 délivré par l'unité de modélisation 31 et en déduire les coordonnées des points du véhicule 50 à un second lieu et ainsi localiser le véhicule 50 considéré au second lieu. A partir de ces coordonnées, l'unité d'estimation de position 320 agit à la façon de l'unité de modélisation 31 et établit un modèle $M_2$ du véhicule 50 (ou d'une partie dudit véhicule) à un lieu de ladite zone considérée 120. Ce nouveau modèle $M_2$ est appelé "modèle au second lieu 2".

Pour la caméra monoculaire 21 de la zone 121, le système de localisation comporte une unité d'estimation de position 321 qui est prévue pour recevoir les signaux d'images de ladite caméra monoculaire 21 ainsi que le modèle au premier lieu $M_1$ d'une zone 110 précédant ladite zone considérée 121 délivré par l'unité de modélisation 31 et pour déterminer les coordonnées des points du véhicule 50 (ou d'une partie dudit véhicule) à un lieu de ladite zone considérée 121 et ainsi localiser ledit véhicule audit lieu. L'unité d'estimation de position 32 agit à la manière de l'unité d'estimation de position 32 de la Fig. 1.

Pour la caméra monoculaire 22 de la zone 122, le système de localisation comporte une unité d'estimation de position 322 qui est prévue pour recevoir les signaux d'images de ladite caméra monoculaire 22 ainsi que le modèle à un lieu précédent qui n'est pas ici le premier lieu mais le second lieu. Ce modèle est donc le modèle au second lieu $M_2$. Elle détermine les coordonnées des points du véhicule 50 (ou d'une partie de celui-ci) à un lieu de ladite zone considérée 122 et ainsi localiser ledit véhicule audit lieu. Pour ce faire, elle agit à la manière de l'unité d'estimation de position 32 de la Fig. 1.

De manière générale, pour chaque caméra monoculaire 2n d'une zone 12n (n étant un entier quelconque), une unité d'estimation de position 32n est prévue pour recevoir les signaux d'images de ladite caméra monoculaire 2n ainsi que le modèle $M_m$ à un lieu d'une zone 12m (m<n) précédant ladite zone considérée 12n, dit lieu précédent, délivré soit par l'unité de modélisation 31 (m = 0) soit par une unité d'estimation de position 32m d'une caméra monoculaire 2m d'une zone 12m précédant ladite zone considérée 12n et pour déterminer les coordonnées du véhicule ou d'une partie dudit véhicule à un lieu de ladite zone considérée 12n et ainsi localiser ledit véhicule audit lieu.

On envisage maintenant une première application particulière du système de localisation qui vient d'être décrit. Cette application concerne l'évaluation de la vitesse moyenne de véhicules entre deux lieux différents.

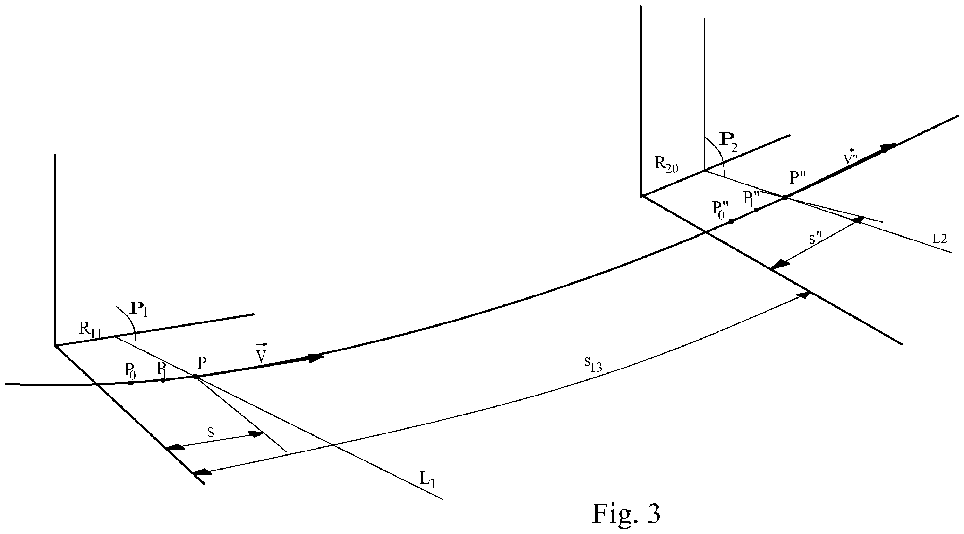

On a représenté à la Fig. 3, sous forme de tétraèdres, les repères $R_{11}$ et $R_{20}$ qui sont respectivement liés aux caméras 11 et 20. Le point P est un ou l'un des points du modèle $M_a$ à un premier lieu du véhicule 50 considéré à l'instant $t_a$ où il a été localisé devant les caméras 11 et 12 (dans ce cas, a = 1) ou devant la $a^{\text{éme}}$ caméra monoculaire 20 (voir Fig. 2) alors que le point P'' est un point ou l'un des points du modèle $M_b$ à un second lieu du même véhicule 50, mais à l'instant $t_b$ où il a été localisé devant la $b^{\text{éme}}$ caméra 20 (b>a).

Si $\vec{V}$ est un vecteur unitaire tangent à la trajectoire estimée du véhicule 50 alors qu'il se trouve devant la caméra 11, l'abscisse curviligne du point P dans le repère $R_{11}$ est estimée par le produit scalaire du vecteur $\vec{V}$ par le vecteur $\overrightarrow{OP}$ (O origine du repère $R_{11}$) :

$$s = \vec{V} . \overrightarrow{OP}$$

De même, si $\vec{V''}$ est un vecteur unitaire tangent à la trajectoire estimée du véhicule 50 alors qu'il se trouve devant la caméra 20, l'abscisse curviligne du point P'' dans le repère $R_{20}$ est estimée par le produit scalaire du vecteur $\vec{V''}$ par le vecteur $\overrightarrow{O''P''}$ (O'' origine du repère $R_{20}$) :

$$s'' = \overrightarrow{V''} . \overrightarrow{O''P''}$$

Si $s_{13}$ est la distance curviligne entre les caméras 11 et 30, la distance parcourue d(P,P'') par le véhicule 50 entre l'instant $t_a$ où il est localisé devant les caméras 11 et 12 et l'instant $t_b$ où il est localisé devant la caméra 20 est donnée par l'expression suivante :

$$d(P,P'') : s_{13} + s'' - s$$

La vitesse moyenne du véhicule 50 entre les instants de localisation $t_a$ et $t_b$ correspond alors à la distance parcourue par unité de temps et est donc donnée par la relation suivante :

$$V_{\text{moyenne}} = d(P,P'') / (t_b - t_a)$$

Les vecteurs $\overrightarrow{OP}$ et $\overrightarrow{O''P''}$ sont respectivement déterminés par l'unité de modélisation 3D 31 et l'unité d'estimation de position 32 (ou par deux unités d'estimation de position différentes, par exemple dans le cas de la Fig. 2, les unités d'estimation de position 320 et 321, ou 321 et 322). Quant aux vecteurs $\vec{V}$ et $\vec{V''}$ tangents à la trajectoire du véhicule 50, il est proposé ici diverses méthodes pour les déterminer.

Selon une première méthode exemplative, ces vecteurs ont pour direction la direction locale de la route. On assume ici que le véhicule 50 a, localement, une trajectoire qui suit le profil de la route qu'il empreinte.

Selon une seconde méthode exemplative, les unités de modélisation 31 et d'estimation de position 32, 320 sont pourvues de systèmes de suivi (tracking en anglais) permettant d'obtenir les modèles $M_a$ et $M_b$ d'un véhicule 50 devant les caméras 11 et 12 et les caméras 20 en au moins deux positions successives $P_0$, $P_1$ et $P''_0$, $P''_1$ respectivement aux premier et second lieux. Les vecteurs $\vec{V}$ et $\vec{V''}$ sont respectivement colinéaires aux vecteurs $\overrightarrow{P_0P_1}$ et $\overrightarrow{P''_0P''_1}$.

Dans cette première application, l'unité 33 calcule comme il vient d'être indiqué, la vitesse moyenne du véhicule 50 entre les points P et P'' et délivre cette information à l'unité de rapport 34. Celle-ci délivre un rapport 34 accompagné, par exemple, d'au moins une photographie prise par une des caméras 11 ou 12 ou 20 ou une autre caméra prévue à cet effet (non représentée), selon l'utilisation envisagée de ce rapport.

On notera que le système de suivi de l'unité de modélisation 31 permet également de mesurer la vitesse instantanée du véhicule au premier lieu devant les caméras 11 et 12. En même temps qu'elle détermine les deux positions successives $P_0$ et $P_1$, l'unité de modélisation 31 peut enregistrer les temps $t_0$ et $t_1$ correspondants. La vitesse instantanée du véhicule 50 au premier lieu est donnée par la relation suivante :

$$V_{\text{instantanée}} = d(P_0, P_1)/(t_1 - t_0)$$

De même, le système de suivi de l'unité ou d'une unité d'estimation de position 32 permet également de mesurer la vitesse instantanée du véhicule à un autre lieu. En effet, en même temps qu'elle détermine les deux positions successives $P''_0$ et $P''_1$, cette unité 32 peut enregistrer les temps $t''_0$ et $t''_1$ correspondants. La vitesse instantanée du véhicule 50 à ce lieu est donnée par la relation suivante :

$$V_{\text{instantanée}} = d(P''_0, P''_1)/(t''_1 - t''_0)$$

On envisage maintenant une autre application particulière du système de localisation qui vient d'être décrit. Cette application concerne la détection de franchissement de lignes. Elle est décrite également en relation avec la Fig. 3.

A la Fig. 3, les lignes de franchissement L1 et L2 sont des génératrices de deux plans verticaux $\mathscr{P}'_1$ et $\mathscr{P}'_2$.

Pour cette application, l'unité de modélisation 31 (ou une unité d'estimation de position 32) est pourvue d'un système de suivi (tracking en anglais) permettant d'obtenir plusieurs positions successives $P_0$, $P_1$ et P d'un objet (véhicule ou partie de véhicule) en un premier lieu et ainsi de déterminer la position particulière P correspondant à celle du franchissement par ledit objet de la ligne de franchissement L1. Par exemple, ce franchissement sera considéré comme ayant lieu lorsqu'au moins un point particulier dudit objet appartiendra au plan vertical $\mathscr{P}'_1$.

De même, l'unité ou une unité d'estimation de position 32, pourvue d'un système de suivi (tracking en anglais) permet d'obtenir plusieurs positions successives $P''_0$, $P''_1$ et P'' de l'objet (véhicule 50 ou partie de véhicule) devant la caméra 20 considérée et ainsi de déterminer une position particulière P'' correspondant à celle du franchissement par ledit objet de la ligne de franchissement L2. Son franchissement par un objet, en l'occurrence un véhicule ou une partie de ce véhicule, sera considéré comme ayant lieu lorsqu'au moins un point particulier dudit objet (qui peut être identique ou différent du point pour franchissement de la première ligne L1) appartiendra au plan vertical $\mathscr{P}'_2$.

L'unité d'estimation de position 33 peut déterminer les instants $t_0$ et $t_1$ de franchissement des lignes L1 et L2. La distance curviligne entre les lignes L1 et L2 étant connue, l'unité d'estimation de position 33 peut ainsi déterminer la vitesse moyenne du véhicule 50 entre les lignes L1 et L2. L'unité 33 peut délivrer cette information à l'unité de rapport 34 qui délivre à son tour un rapport 34 accompagné, par exemple, d'au moins une photographie prise par une des caméras 11, 12 ou 20 ou une caméra dédiée à cet effet, selon l'utilisation envisagée de ce rapport.

On envisage maintenant une autre application particulière du système de localisation qui vient d'être décrit où les lignes L1 et L2 sont des lignes de franchissement de feux rouges.

Selon la législation française donnée ici à titre d'exemple, le passage d'un feu rouge est défini comme d'abord le franchissement d'une première ligne de franchissement L1, dite ligne d'effet de feu, et ensuite le franchissement d'une seconde ligne de franchissement L2, dite ligne de feu, parallèle à la ligne L1 et distante de celle-ci, par exemple à l'opposé de la voie croisée que le feu rouge empêche de traverser. Deux photographies sont prises, l'une au franchissement de la ligne d'effet L1, l'autre au franchissement de la ligne de feu L2.

Comme précédemment, pour cette application, l'unité de modélisation 31 ou une unité d'estimation de position 32 est pourvue d'un système de suivi (tracking en anglais) permettant d'obtenir plusieurs positions successives $P_0$, $P_1$ et P dudit objet (véhicule ou partie de véhicule) (voir par exemple la thèse de Louka Dlagnekov déjà mentionnée ci-dessus et en particulier le chapitre 3.1 consacré au suivi de plaques d'immatriculation) et ainsi de déterminer la position particulière P correspondant à celle du franchissement par ledit objet de la ligne de franchissement L1. Par exemple, ce franchissement sera considéré comme ayant lieu lorsqu'au moins un point dudit objet appartiendra au plan vertical $\mathscr{P}'_1$.

Lorsque ce franchissement a lieu, une première photographie du véhicule 50 est prise en franchissement de la ligne d'effet de feu L1.

Comme précédemment également, l'unité ou une unité d'estimation de position 32 pourvue d'un système de suivi (tracking en anglais) permet d'obtenir plusieurs positions successives $P''_0$, $P''_1$ et P'' de l'objet (véhicule 50 ou partie de véhicule) devant la caméra 20 et ainsi de déterminer une position particulière P'' correspondant à celle du franchissement par ledit objet de la ligne de franchissement L2. Son franchissement par un objet, en l'occurrence un véhicule ou une partie de ce véhicule, sera considéré comme ayant lieu lorsque tous les points dudit véhicule auront dépassé le plan vertical $\mathscr{P}'_2$.

Lorsque ce franchissement a lieu, une seconde photographie du véhicule 50 est prise en franchissement de la ligne de feu L2.

De plus, l'unité d'estimation 32 est pourvue de moyens pour associer les véhicules qui passent devant la caméra 20, afin de sélectionner le modèle M1 issu de l'unité 31 pour un véhicule 50 précédemment suivi au premier lieu 110 et qui maintenant correspond au véhicule reconnu par l'unité 32. Pour cette application, le champ de la caméra 20 comportera avantageusement une zone de recouvrement avec le champ des caméras 11 et 12, dans ce cas cette association peut être réalisée avec les critères spatiaux issus du suivi.

L'unité de rapport 34 est prévue pour émettre un rapport qui inclut la première photographie du véhicule 50 incluant sa plaque d'immatriculation au moment de son franchissement de la ligne d'effet de feu L1 et la seconde photographie du véhicule 50 au moment de son franchissement de la ligne de feu L2.

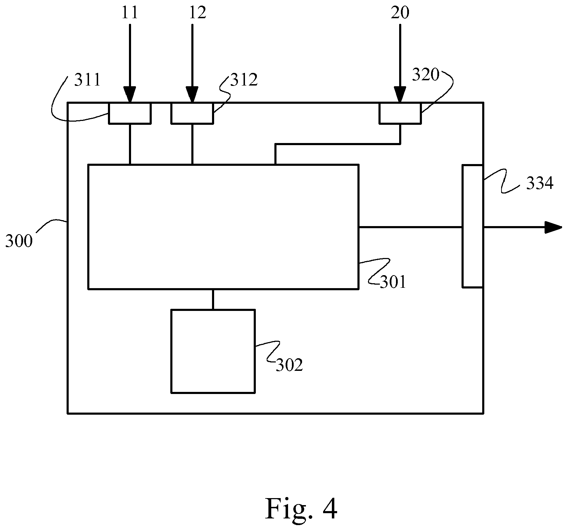

On a représenté à la Fig. 4 une machine informatique 300 qui pourrait constituer l'unité de traitement 30. Cette machine 300 est constituée d'une unité centrale de traitement 301 (Central Processing Unit = CPU) qui est reliée à une mémoire 302, à des ports 311 et 312 destinés à revoir les signaux d'images qui sont respectivement issus des caméras 11 et 12, au moins un port 320 destiné à recevoir les signaux d'images issus d'au moins une caméra 20 et un port 334 qui est prévu pour sortir un rapport à destination d'une interface homme-machine appropriée (non représentée).

La mémoire 302 contient un programme qui comprend des instructions ou des parties de code qui, lorsqu'il est exécuté par l'unité centrale de traitement 301, met en oeuvre un procédé de localisation d'un même véhicule en plusieurs zones différentes les unes des autres.

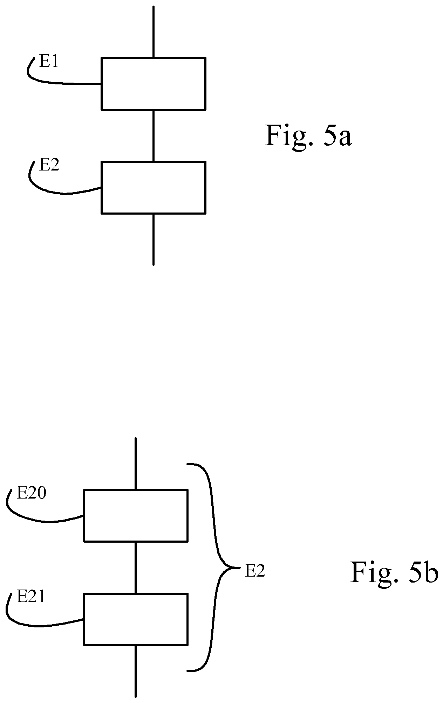

Ce procédé est décrit en relation avec les Figs. 5a et 5b. L'étape E1 est une étape de modélisation au premier lieu pour établir, à partir des signaux d'images reçus de chacune des caméras 11 et 12 de la paire de caméras, un modèle $M_1$ du véhicule 50 ou d'une partie dudit véhicule 50 à un premier lieu de ladite première zone et ainsi localiser ledit véhicule audit premier lieu. Cette étape E1 correspond à ce qui a été décrit précédemment en relation avec l'unité de modélisation 31.

L'étape E2 est une étape d'estimation de position qui détermine, à partir des signaux d'images reçus de ladite caméra monoculaire 20, d'au moins une image reçue d'une des caméras 11 ou 12 au premier lieu ainsi que du modèle au premier lieu $M_1$ établi à l'étape E1 (ou d'un modèle $M_i$ à un lieu d'une zone précédant ladite zone considérée établi à une étape E2 précédente), les coordonnées d'au moins un point du véhicule à un lieu de ladite zone considérée et ainsi localiser ledit véhicule ou partie de véhicule audit lieu. Eventuellement, elle détermine également un modèle $M_j$ dudit véhicule 50 ou partie de véhicule à un lieu de ladite zone considérée. Cette étape E2 correspond à ce qui a été décrit précédemment en relation avec l'unité d'estimation de position 32.

On comprendra que plusieurs étapes E2 peuvent être mises en oeuvre au niveau de chaque caméra monoculaire.

A la Fig. 5b, l'étape E2 est détaillée et comporte une étape E20 pour effectuer la correspondance entre des points images dudit véhicule 50 ou partie de véhicule présents dans l'image délivrée par ladite caméra monoculaire 20 et des points dudit modèle à un lieu précédent (par exemple, le premier lieu), et une étape E21 d'estimation de la variation de pose dudit véhicule 50 pour en déduire la position des points dudit modèle 3D au lieu de ladite zone considérée.

## Revendications

1. Système de localisation d'un véhicule (50) dans un premier lieu à l'intérieur d'une première zone (110) puis dans au moins un second lieu à l'intérieur d'une seconde zone (120, 121, 122) où ledit véhicule (50) passe consécutivement, lesdites zones étant différentes l'une de l'autre, **caractérisé en ce qu'**il comprend:

   - une paire de caméras (11 et 12) dont les champs de vision respectifs incluent la première zone (110) dans ledit premier lieu, et,
   - au moins une caméra monoculaire (20, 21, 22) dont le champ de vision inclut une seconde zone autre que ladite première zone dans ledit second lieu,
   - une unité de modélisation (31) qui est prévue

      - pour recevoir les signaux d'images de chacune des caméras (11 et 12) de la paire de caméras dudit premier lieu,
      - pour détecter ledit véhicule (50) alors qu'il se trouve au premier lieu devant lesdites caméras de ladite paire de caméras dudit premier lieu, et
      - pour établir un modèle 3D à un premier lieu ($M_1$) du véhicule ainsi détecté (50) ou d'une partie dudit véhicule (50) et d'ainsi le localiser audit premier lieu de ladite première zone (110), ledit modèle (M1) étant constitué des coordonnées d'au moins trois points remarquables dudit véhicule (50) ou d'au moins un point remarquable dudit véhicule (50) et d'un plan formé de points dudit véhicule (50), et

      - une unité d'estimation de position (32) qui est prévue

- pour recevoir les signaux d'images de la caméra monoculaire (20, 21, 22) d'une seconde zone (120, 121, 122) dudit second lieu,
- pour recevoir le modèle au premier lieu $M_1$ que ladite unité de modélisation (31) a établi pour ledit véhicule (50), et
- pour établir une correspondance entre le ou chaque point du modèle au premier lieu ($M_1$) et un point dans une image prise par la caméra monoculaire (20, 21, 22) second lieu, et ainsi reconnaître ledit véhicule (50) présent au second lieu de ladite seconde zone et qui a été précédemment localisé audit premier lieu de la première zone (110), ladite unité d'estimation de position (32) étant en outre prévue pour déterminer les coordonnées du ou de points du véhicule reconnu (50) ou d'une partie dudit véhicule reconnu (50) à un second lieu de ladite seconde zone considérée (120, 121, 122) qui correspondent au(x) point(s) dudit modèle au premier lieu (M1) et ainsi localiser ledit véhicule (50) dans le second lieu de ladite seconde zone (120, 121, 122).

2. Système de localisation selon la revendication 1, **caractérisé en ce que** l'unité de modélisation (31) détermine les coordonnées (x,y,z) d'un point ($P_i$) ou d'un ensemble discret de points ($P_i$) qui appartiennent au véhicule (50) considéré ou une partie de celui-ci, lorsqu'il se trouve au premier lieu, ledit modèle au premier lieu $M_1$ comprenant lesdites coordonnées.

3. Système de localisation selon la revendication 2, **caractérisé en ce que** ledit ou lesdits points ($P_i$) dudit ensemble discret de points appartiennent à un même plan d'une partie du véhicule (50) considéré, ledit modèle au premier lieu incluant de plus des informations définissant ledit plan.

4. Système de localisation selon une des revendications 2 ou 3, **caractérisé en ce que** ladite unité d'estimation de position (32) estime la variation de pose dudit véhicule (50) considéré entre ledit premier lieu de la première zone (110) et le second lieu de la seconde zone (120, 121, 122) et en déduit, pour au moins un point ($P_i$) du modèle au premier lieu $M_1$, les coordonnées du point ($P''_i$) au second lieu correspondant.

5. Système de localisation selon la revendication 4, **caractérisé en ce que**, pour estimer la variation de pose dudit véhicule, ladite ou chaque unité d'estimation de position met en oeuvre une méthode d'optimisation non-linéaire de l'erreur de reprojection.

6. Système de localisation selon la revendication 1, **caractérisé en ce que** l'unité de modélisation (31) détermine les coordonnées (x,y,z) d'au moins un point ($P_i$) qui appartient au véhicule (50) considéré ou une partie de celui-ci, lorsqu'il se trouve au premier lieu, ledit modèle au premier lieu $M_1$ comprenant, d'une part, lesdites coordonnées et, d'autre part, des informations définissant le plan de la route sur laquelle ledit véhicule considéré (50) circule ou la hauteur dudit ou desdits point(s) ($P_i$) au-dessus de ladite route.

7. Système de localisation selon une des revendications précédentes, **caractérisé en ce qu'**il comporte de plus au moins une unité d'estimation de position (320, 321, 322) qui est associée à une caméra monoculaire (20, 21, 22) d'une zone (120, 121, 122) autre que la première zone (110) et qui est prévue pour agir en tant qu'unité de modélisation et ainsi établir un modèle à un lieu de ladite zone considérée $M_m$ du véhicule (50) ou d'une partie dudit véhicule (50) et pour transmettre ledit modèle $M_m$ à une unité d'estimation de position (320, 321, 322) suivante.

8. Système d'estimation de la vitesse moyenne d'un véhicule entre deux zones éloignées l'une de l'autre, ledit système comprenant :

   - un système de localisation pour localiser un même véhicule dans un premier lieu d'une première zone desdites zones et dans un second lieu d'une seconde zone desdites zones,
   - des moyens pour déterminer la durée du trajet du véhicule entre le premier lieu et le second lieu,
   - des moyens pour estimer la distance curviligne entre le premier lieu et ledit second lieu,
   - des moyens pour déterminer la vitesse moyenne dudit véhicule à partir de ladite durée et ladite distance curviligne,

   **caractérisé en ce que** ledit système de localisation est un système de localisation selon une des revendications 1 à 7.

9. Système de détection de franchissement par un véhicule d'au moins une ligne dans une zone, **caractérisé en ce que** lesdits moyens de détection sont constitués d'un système de localisation selon une des revendications 1 à 7, dont ladite unité de modélisation ou ladite ou chaque unité d'estimation de position est en outre pourvue d'un système de suivi pour détecter le franchissement de la ligne de la zone considérée.

10. Système de mesure de la vitesse instantanée d'un véhicule dans un lieu d'une zone, **caractérisé en ce qu'**il comprend un système de localisation selon une des revendications 1 à 7.

11. Procédé de localisation d'un véhicule (50) dans un premier lieu à l'intérieur d'une première zone (110) puis dans au moins un second lieu à l'intérieur d'une seconde zone (110, 120) où le véhicule (50) passe consécutivement, lesdites zones étant différentes l'une de l'autre, ledit procédé étant mis en oeuvre par un système de localisation qui comprend:

- une paire de caméras (11 et 12) dont les champs de vision respectifs incluent la première zone (110) dans ledit premier lieu, et,
- une caméra monoculaire (20, 21, 22) dont le champ de vision inclut une zone autre que ladite première zone dans ledit second lieu,
- **caractérisé en ce qu'**il comporte les étapes suivantes, mises en oeuvre par une une unité de modélisation (31) dudit système de localisation:

- une étape de réception des signaux d'images reçus de chacune des caméras (11 et 12) de la paire de caméras dudit premier lieu,
- une étape de détection dudit véhicule alors qu'il se trouve au premier lieu devant lesdites caméras (11 et 12) de ladite paire de caméras dudit premier lieu,
- une étape de modélisation pour établir, à partir des signaux d'images reçus de chacune des caméras (11 et 12) de la paire de caméras dudit premier lieu, un modèle 3D à un premier lieu $M_1$ dudit véhicule (50) ou d'une partie dudit véhicule (50) et d'ainsi le localiser audit premier lieu de ladite première zone (110), ledit modèle (M1) étant constitué des coordonnées d'au moins trois points remarquables dudit véhicule (50) ou d'au moins un point remarquable dudit véhicule (50) et d'un plan formé de points remarquables dudit véhicule (50), et

- les étapes suivantes mises en oeuvre par une unité d'estimation de position (32) du système de localisation,

- une étape de réception des signaux d'images de la caméra monoculaire (20, 21, 22) d'une seconde zone (120, 121, 122) dudit second lieu,
- une étape de reconnaissance dudit véhicule (50) présent au second lieu de ladite seconde zone et qui a été précédemment localisé audit premier lieu de ladite première zone (110),
- une étape de réception du modèle au premier lieu $M_1$ que ladite unité de modélisation (31) a établi pour ledit véhicule ainsi reconnu (50), et
- une étape d'établissement d'une correspondance entre le ou chaque point du modèle au premier lieu ($M_1$) et un point dans une image prise par la caméra monoculaire (20, 21, 22) dudit second lieu,

ainsi qu'une étape de détermination des coordonnées du ou des points du véhicule reconnu (50) ou d'une partie dudit véhicule reconnu (50) à un second lieu de ladite seconde zone considérée (120, 121, 122) qui correspondent au(x) point(s) dudit modèle au premier lieu (M1) et d'ainsi de localisation dudit véhicule (50) dans le second lieu de ladite seconde zone (120, 121, 122).

12. Procédé de localisation selon la revendication 11, **caractérisé en ce que** ladite étape de modélisation (31) consiste à déterminer les coordonnées (x,y,z) d'un point ($P_i$) ou de points ($P_i$) d'un ensemble discret de points qui appartiennent au véhicule (50) considéré ou une partie de celui-ci, lorsqu'il se trouve au premier lieu et à déterminer ledit modèle au premier lieu $M_1$ comme comprenant lesdites coordonnées.

13. Procédé de localisation selon la revendication 12, **caractérisé en ce que** ledit ou lesdits points ($P_i$) dudit ensemble discret de points appartiennent à même plan d'une partie de l'objet réel, ledit modèle au premier lieu incluant de plus des informations définissant ledit plan.

14. Procédé de localisation selon une des revendications 12 ou 13, **caractérisé en ce que** ladite étape d'estimation de position (32) consiste à estimer la variation de pose dudit véhicule (50) entre le premier lieu de la première zone (110) et le second lieu de la seconde zone (120) et à déduire, pour au moins un point ($P_i$) du modèle au premier lieu $M_1$, les coordonnées du point ($P''_i$) au second lieu correspondant.

**15.** Procédé de localisation selon la revendication 14, **caractérisé en ce que**, pour estimer la variation de pose dudit véhicule, l'étape d'estimation de position met en oeuvre une méthode d'optimisation non-linéaire de l'erreur de reprojection.

**16.** Procédé de localisation selon la revendication 11, **caractérisé en ce que** l'étape de modélisation consiste à déterminer les coordonnées (x,y,z) d'au moins un point P qui appartient au véhicule (50) considéré ou une partie de celui-ci, lorsqu'il se trouve au premier lieu, et à déterminer ledit modèle au premier lieu $M_1$ comme comprenant, d'une part, lesdites coordonnées et, d'autre part, des informations définissant le plan de la route ou la hauteur dudit point $P_i$ au-dessus de la route.

**17.** Procédé d'estimation de la vitesse moyenne d'un véhicule entre deux zones différentes et éloignées l'une de l'autre, ledit procédé comprenant :

- une étape de localisation pour localiser un même véhicule en un premier lieu d'une première zone desdites zones et en un second lieu d'une seconde zone desdites zones,
- une étape pour déterminer la durée du trajet du véhicule entre le premier lieu et le second lieu,
- une étape pour estimer la distance curviligne entre le premier lieu et ledit second lieu,
- une étape pour estimer ladite vitesse moyenne à partir de ladite durée et ladite distance curviligne,

**caractérisé en ce que** ladite étape de localisation est mise en oeuvre selon un procédé de localisation selon une des revendications 11 à 16.

**18.** Procédé de détection du franchissement d'au moins une ligne d'une zone par un véhicule, comportant au moins une étape de détection du franchissement de ladite ou desdites ligne(s), **caractérisé en ce que** la ou lesdites étapes de détection sont mises en oeuvre selon un procédé de localisation selon une des revendications 11 à 16, ladite étape de modélisation ou ladite ou chaque étape d'estimation de position comprenant une étape de suivi pour détecter le franchissement de la ligne de la zone considérée.

**19.** Procédé de détection selon la revendication 18, **caractérisé en ce qu'**il est prévu pour détecter le franchissement par ledit véhicule d'une première ligne dans une première zone puis d'une seconde ligne dans une seconde zone.

**20.** Procédé de détection selon la revendication 18, **caractérisé en ce que** ladite étape de modélisation ou ladite ou chaque étape d'estimation de position est prévue pour mesurer la vitesse instantanée dudit véhicule lors du franchissement par celui-ci de ladite première ligne et/ou de ladite seconde ligne.

**21.** Programme inscrit sur un support et destiné à être chargé dans un dispositif programmable d'un système de localisation selon une des revendications 1 à 7 ou d'un système d'estimation de vitesse moyenne selon la revendication 8, ou d'un système de détection de franchissement de lignes selon la revendication 9 ou 10, ledit programme comprenant des instructions ou parties de code pour mettre en oeuvre les étapes d'un procédé de localisation ou d'estimation de vitesse moyenne ou de détection de franchissement de feux rouges selon une des revendications 11 à 20, lorsque ledit programme est exécuté par ledit dispositif programmable.

**Patentansprüche**

**1.** System zur Lokalisierung eines Fahrzeugs (50) an einem ersten Ort innerhalb einer ersten Zone (110), dann an mindestens einem zweiten Ort innerhalb einer zweiten Zone (120, 121, 122), die das Fahrzeug (50) nacheinander durchfährt, wobei die Zonen sich voneinander unterscheiden, **dadurch gekennzeichnet, dass** es enthält:

- ein Paar von Kameras (11 und 12), deren jeweilige Sehfelder die erste Zone (110) am ersten Ort einschließen, und
- mindestens eine monokulare Kamera (20, 21, 22), deren Sehfeld eine zweite Zone anders als die erste Zone am zweiten Ort einschließt,
- eine Modellisierungseinheit (31), die vorgesehen ist

- die Bildsignale von jeder der Kameras (11 und 12) des Paars von Kameras des ersten Orts zu empfangen,
- das Fahrzeug (50) zu erfassen, während es sich am ersten Ort vor den Kameras des Paars von Kameras des ersten Orts befindet, und

- an einem ersten Ort ($M_1$) ein 3D-Modell des so erfassten Fahrzeugs (50) oder eines Teils des Fahrzeugs (50) zu erstellen und es so am ersten Ort der ersten Zone (110) zu lokalisieren, wobei das Modell ($M_1$) aus den Koordinaten von mindestens drei Kennpunkten des Fahrzeugs (50) oder aus mindestens einem Kennpunkt des Fahrzeugs (50) und einer aus Punkten des Fahrzeugs (50) gebildeten Ebene besteht, und

- eine Positionsschätzeinheit (32), die vorgesehen ist

- die Bildsignale von der monokularen Kamera (20, 21, 22) einer zweiten Zone (120, 121, 122) des zweiten Orts zu empfangen,
- das Modell am ersten Ort $M_1$ zu empfangen, das die Modellisierungseinheit (31) für das Fahrzeug (50) erstellt hat, und
- eine Entsprechung zwischen dem oder jedem Punkt des Modells am ersten Ort ($M_1$) und einem Punkt in einem von der monokularen Kamera (20, 21, 22) vom zweiten Ort aufgenommenen Bild zu erstellen und so das Fahrzeug (50) zu erkennen, das sich am zweiten Ort der zweiten Zone befindet und das vorher am ersten Ort der ersten Zone (110) lokalisiert wurde,

wobei die Positionsschätzeinheit (32) außerdem vorgesehen ist, um die Koordinaten des Punkts oder der Punkte des erkannten Fahrzeugs (50) oder eines Teils des erkannten Fahrzeugs (50) an einem zweiten Ort der zweiten betrachteten Zone (120, 121, 122) zu bestimmen, die dem Punkt (den Punkten) des Modells am ersten Ort ($M_1$) entsprechen und so das Fahrzeug (50) am zweiten Ort der zweiten Zone (120, 121, 122) zu lokalisieren.

2. Lokalisierungssystem nach Anspruch 1, **dadurch gekennzeichnet, dass** die Modellisierungseinheit (31) die Koordinaten (x,y,z) eines Punkts ($P_i$) oder einer diskreten Einheit von Punkten ($P_i$) bestimmt, die zum betreffenden Fahrzeug (50) oder einem Teil von diesem gehören, wenn es sich am ersten Ort befindet, wobei das Modell am ersten Ort $M_1$ die Koordinaten enthält.

3. Lokalisierungssystem nach Anspruch 2, **dadurch gekennzeichnet, dass** der Punkt oder die Punkte ($P_i$) der diskreten Einheit von Punkten zu einer gleichen Ebene eines Teils des betreffenden Fahrzeugs (50) gehören, wobei das Modell am ersten Ort außerdem die Ebene definierende Informationen einschließt.

4. Lokalisierungssystem nach einem der Ansprüche 2 oder 3, **dadurch gekennzeichnet, dass** die Positionsschätzeinheit (32) die Änderung der Stellung des betreffenden Fahrzeugs (50) zwischen dem ersten Ort der ersten Zone (110) und dem zweiten Ort der zweiten Zone (120, 121, 122) schätzt und daraus für mindestens einen Punkt ($P_i$) des Modells am ersten Ort $M_1$ die Koordinaten des Punkts ($P''_i$) am entsprechenden zweiten Ort ableitet.

5. Lokalisierungssystem nach Anspruch 4, **dadurch gekennzeichnet, dass** zum Schätzen der Stellungsänderung des Fahrzeugs die oder jede Positionsschätzeinheit ein Verfahren der nichtlinearen Optimierung des Reprojektionsfehlers anwendet.

6. Lokalisierungssystem nach Anspruch 1, **dadurch gekennzeichnet, dass** die Modellisierungseinheit (31) die Koordinaten (x,y,z) mindestens eines Punkts ($P_i$), der zum betreffenden Fahrzeug (50) oder zu einem Teil von diesem gehört, bestimmt, wenn es sich am ersten Ort befindet, wobei das Modell am ersten Ort $M_1$ einerseits die Koordinaten und andererseits Informationen enthält, die die Ebene der Straße, auf der das betreffende Fahrzeug (50) fährt, oder die Höhe des Punkts oder der Punkte ($P_i$) über der Straße definieren.

7. Lokalisierungssystem nach einem der vorhergehenden Ansprüche, **dadurch gekennzeichnet, dass** es außerdem mindestens eine Positionsschätzeinheit (320, 321, 322) aufweist, die einer monokularen Kamera (20, 21, 22) einer anderen Zone (120, 121, 122) als die erste Zone (110) zugeordnet ist, und die vorgesehen ist, als Modellisierungseinheit zu agieren und so ein Modell an einem Ort der betreffenden Zone $M_m$ des Fahrzeugs (50) oder eines Teils des Fahrzeugs (50) zu erstellen und das Modell $M_m$ an eine folgende Positionsschätzeinheit (320, 321, 322) zu übertragen.

8. System zum Schätzen der mittleren Geschwindigkeit eines Fahrzeugs zwischen zwei voneinander entfernten Zonen, wobei das System enthält:

- ein Lokalisierungssystem, um ein gleiches Fahrzeug an einem ersten Ort einer ersten Zone der Zonen und an einem zweiten Ort einer zweiten Zone der Zonen zu lokalisieren,
- Einrichtungen zum Bestimmen der Dauer der Strecke des Fahrzeugs zwischen dem ersten Ort und dem zweiten Ort,
- Einrichtungen zum Schätzen des krummlinigen Abstands zwischen dem ersten Ort und dem zweiten Ort,
- Einrichtungen zum Bestimmen der mittleren Geschwindigkeit des Fahrzeugs ausgehend von der Dauer und dem krummlinigen Abstand,

**dadurch gekennzeichnet, dass** das Lokalisierungssystem ein Lokalisierungssystem nach einem der Ansprüche 1 bis 7 ist.

9. System zur Erfassung der Überschreitung mindestens einer Linie in einer Zone durch ein Fahrzeug, **dadurch gekennzeichnet, dass** die Erfassungseinrichtungen aus einem Lokalisierungssystem nach einem der Ansprüche 1 bis 7 bestehen, von dem die Modellisierungseinheit oder die oder jede Positionsschätzeinheit außerdem mit einem Nachführungssystem versehen ist, um die Überschreitung der Linie der betreffenden Zone zu erfassen.

10. System zum Messen der Augenblicksgeschwindigkeit eines Fahrzeugs an einem Ort einer Zone, **dadurch gekennzeichnet, dass** es ein Lokalisierungssystem nach einem der Ansprüche 1 bis 7 enthält.

11. Verfahren zur Lokalisierung eines Fahrzeugs (50) an einem ersten Ort innerhalb einer ersten Zone (110) und dann mindestens an einem zweiten Ort innerhalb einer zweiten Zone (110, 120), die das Fahrzeug (50) nacheinander durchfährt, wobei die Zonen sich voneinander unterscheiden, wobei das Verfahren von einem Lokalisierungssystem angewendet wird, das enthält:

- ein Paar von Kameras (11 und 12), deren jeweilige Sehfelder die erste Zone (110) am ersten Ort einschließen, und
- eine monokulare Kamera (20, 21, 22), deren Sehfeld eine andere Zone als die erste Zone am zweiten Ort einschließt,
- **dadurch gekennzeichnet, dass** es die folgenden Schritte aufweist, die von einer Modellisierungseinheit (31) des Lokalisierungssystems angewendet werden:

- einen Schritt des Empfangs der Bildsignale, die von jeder der Kameras (11 und 12) des Paars von Kameras des ersten Orts empfangen werden,
- einen Schritt der Erfassung des Fahrzeugs, während es sich am ersten Ort vor den Kameras (11 und 12) des Paars von Kameras des ersten Orts befindet,
- einen Modellisierungsschritt, um ausgehend von den von jeder der Kameras (11 und 12) des Paars vom Kameras des ersten Orts empfangenen Bildsignalen an einem ersten Ort ($M_1$) ein 3D-Modell des Fahrzeugs (50) oder eines Teils des Fahrzeugs (50) zu erstellen und es so am ersten Ort der ersten Zone (110) zu lokalisieren, wobei das Modell ($M_1$) aus den Koordinaten von mindestens drei Kennpunkten des Fahrzeugs (50) oder aus mindestens einem Kennpunkt des Fahrzeugs (50) und einer aus Punkten des Fahrzeugs (50) gebildeten Ebene besteht, und

- die folgenden Schritte, die von einer Positionsschätzeinheit (32) des Lokalisierungssystems angewendet werden

- einen Schritt des Empfangs der Bildsignale von der monokularen Kamera (20, 21, 22) einer zweiten Zone (120, 121, 122) des zweiten Orts,
- einen Schritt der Erkennung des am zweiten Ort der zweiten Zone vorhandenen Fahrzeugs (50) und das vorher am ersten Ort der ersten Zone (110) lokalisiert wurde,
- einen Schritt des Empfangs des Modells am ersten Ort $M_1$, das die Modellisierungseinheit (31) für das so erkannte Fahrzeug erstellt hat (50), und
- einen Schritt des Erstellens einer Entsprechung zwischen dem oder jedem Punkt des Modells am ersten Ort ($M_1$) und einem Punkt in einem von der monokularen Kamera (20, 21, 22) des zweiten Orts aufgenommenen Bild,
- sowie einen Schritt der Bestimmung der Koordinaten des Punkts oder der Punkte des erkannten Fahrzeugs (50) oder eines Teils des erkannten Fahrzeugs (50) an einem zweiten Ort der betreffenden zweiten Zone (120, 121, 122), die dem Punkt (den Punkten) des Modells am erstem Ort ($M_1$) entsprechen, und so der Lokalisierung des Fahrzeugs (50) am zweiten Ort der zweiten Zone (120, 121, 122).

12. Lokalisierungsverfahren nach Anspruch 11, **dadurch gekennzeichnet, dass** der Modellisierungsschritt (31) darin besteht, die Koordinaten (x,y,z) eines Punkts ($P_i$) oder von Punkten ($P_i$) einer diskreten Einheit von Punkten, die zum betreffenden Fahrzeug (50) oder zu einem Teil von diesem gehören, wenn es sich am ersten Ort befindet, zu bestimmen, und das Modell am ersten Ort $M_1$ als die Koordinaten enthaltend zu bestimmen.

**13.** Lokalisierungsverfahren nach Anspruch 12, **dadurch gekennzeichnet, dass** der Punkt oder die Punkte ($P_i$) der diskreten Einheit von Punkten zu einer gleichen Ebene eines Teils des realen Objekts gehören, wobei das Modell am ersten Ort außerdem die Ebene definierende Informationen einschließt.

**14.** Lokalisierungsverfahren nach einem der Ansprüche 12 oder 13, **dadurch gekennzeichnet, dass** der Positionsschätzschritt (32) darin besteht, die Änderung der Stellung des Fahrzeugs (50) zwischen dem ersten Ort der ersten Zone (110) und dem zweiten Ort der zweiten Zone (120) zu schätzen und für mindestens einen Punkt ($P_i$) des Modells am ersten Ort $M_1$ die Koordinaten des Punkts ($P''_i$) am entsprechenden zweiten Ort abzuleiten.

**15.** Lokalisierungsverfahren nach Anspruch 14, **dadurch gekennzeichnet, dass** zum Schätzen der Stellungsänderung des Fahrzeugs der Positionsschätzschritt ein nicht-lineares Optimierungsverfahren des Reprojektionsfehlers anwendet.

**16.** Lokalisierungsverfahren nach Anspruch 11, **dadurch gekennzeichnet, dass** der Modellisierungsschritt darin besteht, die Koordinaten (x,y,z) mindestens eines Punkts P, der zum betreffenden Fahrzeug (50) oder zu einem Teil von diesem gehört, zu bestimmen, wenn es sich am ersten Ort befindet, und zu bestimmen, dass das Modell am ersten Ort $M_1$ einerseits die Koordinaten und andererseits Informationen enthält, die die Ebene der Straße oder die Höhe des Punkts $P_i$ über der Straße definieren.

**17.** Verfahren zur Schätzung der mittleren Geschwindigkeit eines Fahrzeugs zwischen zwei unterschiedlichen und voneinander entfernten Zonen, wobei das Verfahren enthält:

- einen Schritt der Lokalisierung, um ein gleiches Fahrzeug an einem ersten Ort einer ersten Zone der Zonen und an einem zweiten Ort einer zweiten Zone der Zonen zu lokalisieren,
- einen Schritt zum Bestimmen der Dauer der Strecke des Fahrzeugs zwischen dem ersten Ort und dem zweiten Ort,
- einen Schritt zum Schätzen des krummlinigen Abstands zwischen dem ersten Ort und dem zweiten Ort,
- einen Schritt zum Bestimmen der mittleren Geschwindigkeit des Fahrzeugs ausgehend von der Dauer und dem krummlinigen Abstand,

**dadurch gekennzeichnet, dass** der Lokalisierungsschritt gemäß einem Lokalisierungsverfahren nach einem der Ansprüche 11 bis 16 angewendet wird.

**18.** Verfahren zur Erfassung des Überschreitens mindestens einer Linie einer Zone durch ein Fahrzeug, das mindestens einen Schritt der Erfassung des Überschreitens der Linie oder der Linien aufweist, **dadurch gekennzeichnet, dass** der oder die Erfassungsschritte gemäß einem Lokalisierungsverfahren nach einem der Ansprüche 11 bis 16 durchgeführt werden, wobei der Modellisierungsschritt oder der oder jeder Positionsschätzschritt einen Nachführungsschritt zum Erfassen des Überschreitens der Linie der betreffenden Zone enthält.

**19.** Erfassungsverfahren nach Anspruch 18, **dadurch gekennzeichnet, dass** es vorgesehen ist, um das Überschreiten durch das Fahrzeug einer ersten Linie in einer ersten Zone und dann einer zweiten Linie in einer zweiten Zone zu erfassen.

**20.** Erfassungsverfahren nach Anspruch 18, **dadurch gekennzeichnet, dass** der Modellisierungsschritt oder der oder jeder Positionsschätzschritt vorgesehen ist, um die Augenblicksgeschwindigkeit des Fahrzeugs beim dessen Überschreiten der ersten Linie und/oder der zweiten Linie zu messen.

**21.** Programm, das auf einen Träger aufgezeichnet und dazu bestimmt ist, in eine programmierbare Vorrichtung eines Lokalisierungssystems nach einem der Ansprüche 1 bis 7 oder eines Schätzsystems mittlerer Geschwindigkeit nach Anspruch 8, oder eines Systems zur Erfassung des Überschreitens von Linien nach Anspruch 9 oder 10 geladen zu werden, wobei das Programm Codeanweisungen oder -teile zur Durchführung der Schritte eines Lokalisierungsverfahrens oder eines Schätzverfahrens mittlerer Geschwindigkeit oder eines Verfahrens zur Erfassung des Überfahrens von roten Ampeln nach einem der Ansprüche 11 bis 20 enthält, wenn das Programm von der programmierbaren Vorrichtung ausgeführt wird.

**Claims**

1. System for locating a vehicle (50) in a first place inside a first area (110) and then in at least one second place inside a second area (120, 121, 122) where the said vehicle (50) passes consecutively, the said areas being mutually different, **characterized in that** it comprises:

   - a pair of cameras (11 and 12) whose respective fields of vision include the first area (110) in the said first place, and,
   - at least one monocular camera (20, 21, 22) whose field of vision includes a second area other than the said first area in the said second place,
   - a modelling unit (31) which is designed
   - to receive the signals of images of each of the cameras (11 and 12) of the pair of cameras of the said first place,
   - to detect the said vehicle (50) while it is situated at the first place in front of the said cameras of the said pair of cameras of the said first place, and
   - to establish a 3D model at a first place ($M_1$) of the vehicle thus detected (50) or of a part of the said vehicle (50) and thus locate it at the said first place of the said first area (110), the said model ($M_1$) consisting of the coordinates of at least three significant points of the said vehicle (50) or of at least one significant point of the said vehicle (50) and of a plane formed of points of the said vehicle (50), and
   - a position estimating unit (32) which is designed
   - to receive the signals of images of the monocular camera (20, 21, 22) of a second area (120, 121, 122) of the said second place,
   - to receive the model at the first place $M_1$ that the said modelling unit (31) has established for the said vehicle (50), and
   - to establish a correspondence between the or each point of the model at the first place ($M_1$) and a point in an image taken by the monocular camera (20, 21, 22) of the said second place, and thus recognize the said vehicle (50) present at the second place of the said second area and which was previously located at the said first place of the first area (110),

   the said position estimating unit (32) being furthermore designed to determine the coordinates of the point or points of the recognized vehicle (50) or of a part of the said recognized vehicle (50) at a second place of the said second area considered (120, 121, 122) which correspond to the point (s) of the said model at the first place ($M_1$) and thus locate the said vehicle (50) in the second place of the said second area (120, 121, 122).

2. Locating system according to Claim 1, **characterized in that** the modelling unit (31) determines the coordinates (x, y,z) of a point ($P_i$) or of a discrete set of points ($P_i$) which belong to the vehicle (50) considered or a part of the latter, when it is situated at the first place, the said model at the first place $M_1$ comprising the said coordinates.

3. Locating system according to Claim 2, **characterized in that** the said point or the said points ($P_i$) of the said discrete set of points belong to one and the same plane of a part of the vehicle (50) considered, the said model at the first place including moreover information defining the said plane.

4. Locating system according to one of Claims 2 or 3, **characterized in that** the said position estimating unit (32) estimates the variation of stance of the said vehicle (50) considered between the said first place of the first area (110) and the second place of the second area (120, 121, 122) and deduces therefrom, for at least one point ($P_i$) of the model at the first place $M_1$, the coordinates of the point ($P''_i$) at the corresponding second place.

5. Locating system according to Claim 4, **characterized in that**, to estimate the variation of stance of the said vehicle, the said or each position estimating unit implements a plan for non-linear optimization of the reprojection error.

6. Locating system according to Claim 1, **characterized in that** the modelling unit (31) determines the coordinates (x, y,z) of at least one point ($P_i$) which belongs to the vehicle (50) considered or a part of the latter, when it is situated at the first place, the said model at the first place $M_1$ comprising, on the one hand, the said coordinates and, on the other hand, information defining the plane of the road on which the said vehicle considered (50) is travelling or the height of the said point or points ($P_i$) above the said road.

7. Locating system according to one of the preceding claims, **characterized in that** it moreover comprises at least one position estimating unit (320, 321, 322) which is associated with a monocular camera (20, 21, 22) of an area (120, 121, 122) other than the first area (110) and which is designed to act as modelling unit and thus establish a model at a place of the said area considered $M_m$ of the vehicle (50) or of a part of the said vehicle (50) and to transmit the said model $M_m$ to a following position estimating unit (320, 321, 322).

8. System for estimating the average speed of a vehicle between two mutually distant areas, the said system comprising:

- a locating system for locating one and the same vehicle in a first place of a first area of the said areas and in a second place of a second area of the said areas,
- means for determining the duration of the journey of the vehicle between the first place and the second place,
- means for estimating the curvilinear distance between the first place and the said second place,
- means for determining the average speed of the said vehicle on the basis of the said duration and the said curvilinear distance,

**characterized in that** the said locating system is a locating system according to one of Claims 1 to 7.

9. System for detecting crossing by a vehicle of at least one line in an area, **characterized in that** the said detecting means consist of a locating system according to one of Claims 1 to 7, whose said modelling unit or the said or each position estimating unit of which is furthermore provided with a tracking system for detecting the crossing of the line of the area considered.

10. System for measuring the instantaneous speed of a vehicle in a place of an area, **characterized in that** it comprises a locating system according to one of Claims 1 to 7.

11. Method for locating a vehicle (50) in a first place inside a first area (110) and then in at least one second place inside a second area (110, 120) where the said vehicle (50) passes consecutively, the said areas being mutually different, the said method being implemented by a locating system which comprises:

- a pair of cameras (11 and 12) whose respective fields of vision include the first area (110) in the said first place, and,
- a monocular camera (20, 21, 22) whose field of vision includes an area other than the said first area in the said second place,
- **characterized in that** it comprises the following steps, implemented by a modelling unit (31) of the said locating system:
- a step of receiving the image signals received from each of the cameras (11 and 12) of the pair of cameras of the said first place,
- a step of detecting the said vehicle while it is situated at the first place in front of the said cameras (11 and 12) of the said pair of cameras of the said first place,
- a modelling step to establish, on the basis of the image signals received from each of the cameras (11 and 12) of the pair of cameras of the said first place, a 3D model at a first place $M_1$ of the said vehicle (50) or of a part of the said vehicle (50) and thus locate it at the said first place of the said first area (110), the said model ($M_1$) consisting of the coordinates of at least three significant points of the said vehicle (50) or of at least one significant point of the said vehicle (50) and of a plane formed of significant points of the said vehicle (50), and
- the following steps implemented by a position estimating unit (32) of the locating system,
- a step of receiving the signals of images of the monocular camera (20, 21, 22) of a second area (120, 121, 122) of the said second place,
- a step of recognizing the said vehicle (50) present at the second place of the said second area and which was previously located at the said first place of the said first area (110),
- a step of receiving the model at the first place $M_1$ that the said modelling unit (31) has established for the said vehicle thus recognized (50), and
- a step of establishing a correspondence between the or each point of the model at the first place ($M_1$) and a point in an image taken by the monocular camera (20, 21, 22) of the said second place,

as well as a step of determining the coordinates of the point or points of the recognized vehicle (50) or of a part of the said recognized vehicle (50) at a second place of the said area considered (120, 121, 122) which correspond to the point (s) of the said model at the first place ($M_1$) and thus of locating the said vehicle (50) in the second place of the said second area (120, 121, 122).

12. Locating method according to Claim 11, **characterized in that** the said modelling step (31) consists in determining the coordinates $(x, y, z)$ of a point ($P_i$) or of points ($P_i$) of a discrete set of points which belong to the vehicle (50) considered or a part of the latter, when it is situated at the first place and in determining the said model at the first place $M_1$ as comprising the said coordinates.

13. Locating method according to Claim 12, **characterized in that** the said point or the said points ($P_i$) of the said discrete set of points belong to same plane of a part of the real object the said model at the first place including moreover information defining the said plane.

14. Locating method according to one of Claims 12 or 13, **characterized in that** the said position estimating step (32) consists in estimating the variation of stance of the said vehicle (50) between the first place of the first area (110) and the second place of the second area (120) and in deducing, for at least one point ($P_i$) of the model at the first place $M_1$, the coordinates of the point ($P''_i$) at the corresponding second place.

15. Locating method according to Claim 14, **characterized in that**, to estimate the variation of stance of the said vehicle, the position estimating step implements a method for non-linear optimization of the reprojection error.

16. Locating method according to Claim 11, **characterized in that** the modelling step consists in determining the coordinates (x,y,z) of at least one point P which belongs to the vehicle (50) considered or a part of the latter, when it is situated at the first place, and in determining the said model at the first place $M_1$ as comprising, on the one hand, the said coordinates and, on the other hand, information defining the plane of the road or the height of the said point $P_i$ above the road.

17. Method for estimating the average speed of a vehicle between two mutually different and distant areas, the said method comprising:

   - a locating step for locating one and the same vehicle at a first place of a first area of the said areas and at a second place of a second area of the said areas,
   - a step for determining the duration of the journey of the vehicle between the first place and the second place,
   - a step for estimating the curvilinear distance between the first place and the said second place,
   - a step for estimating the said average speed on the basis of the said duration and the said curvilinear distance,

   **characterized in that** the said locating step is implemented according to a locating method according to one of Claims 11 to 16.

18. Method for detecting the crossing of at least one line of an area by a vehicle, comprising at least one step of detecting the crossing of the said line or lines, **characterized in that** the said detecting step or steps are implemented according to a locating method according to one of Claims 11 to 16, the said modelling step or the said or each position estimating step comprising a tracking step for detecting the crossing of the line of the area considered.

19. Detecting method according to Claim 18, **characterized in that** it is designed to detect the crossing by the said vehicle of a first line in a first area and then of a second line in a second area.

20. Detecting method according to Claim 18, **characterized in that** the said modelling step or the said or each position estimating step is designed to measure the instantaneous speed of the said vehicle during the crossing by the latter of the said first line and/or of the said second line.

21. Program written on a medium and intended to be loaded into a programmable device of a locating system according to one of Claims 1 to 7 or of a system for estimating average speed according to Claim 8, or of a system for detecting crossing of lines according to Claim 9 or 10, the said program comprising code instructions or parts for implementing the steps of a method of locating or of estimating average speed or of detecting crossing of red lights according to one of Claims 11 to 20, when the said program is executed by the said programmable device.

Fig. 1

EP 2 937 812 B1

Fig. 2

Fig. 3

Fig. 4

E1

Fig. 5a

E2

E20

E21

E2

Fig. 5b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007107875 A

**Littérature non-brevet citée dans la description**

- **DE LOWE, DAVID G.** Distinctive Image Features From Scale-Invariant Keypoints. *International journal ofcomputer vision,* 2004, vol. 60.2, 91-110
- **DE BAY H. ; ESS A. ; TUYTELAARS T. ; VAN GOOL L.** Speeded-up robust features (SURF). *Computer Vision and Image Understanding,* 2008, vol. 110 (3), 346-359
- **DE HARTLEY, RICHARD ; ANDREW ZISSERMAN.** *Multiple View Geometry In Computer Vision,* 2000
- **DE R. HARLEY ; A ZISSERMAN.** Multiple View Geometry in Computer Vision. Cambridge University Press